# EUROPEAN PATENT APPLICATION

(11) **EP 4 685 061 A1**
(43) Date of publication of application: **28.01.2026**
(21) Application number: 23923770.4
(22) Date of filing: 16.11.2023
(51) Int. Cl.: B65B 33/02

(54) **PASTING AID, PROTECTIVE FILM ASSEMBLY AND FILM PASTING ASSEMBLY**

(30) Priority: 21.02.2023 CN 202320345552 U; 26.10.2023 CN 202322900167 U
(71) Applicant: Shenzhen Lanhe Technologies Co., Ltd., Shenzhen, Guangdong 518131 (CN)
(72) Inventor: LI, Yibo, Shenzhen, Guangdong 518131 (CN); WEI, Wei, Shenzhen, Guangdong 518131 (CN)
(74) Representative: Cabinet Chaillot
(86) International application number: PCT/CN2023/132149
(87) International publication number: WO 2024/174607

(57) **Abstract**

The present utility model provides a film applicator, a protective film unit and a film applicator assembly. The film applicator includes a main body including a positioning cavity for positioning an electronic device therein; a positioning film located in the positioning cavity or at one side of the positioning cavity. The positioning film is connected to the main body. The protective film unit is connected to the main body via the positioning film. The protective film unit is adhesively connected to the positioning film. The protective film unit is adhesively connected to the film applicator via the positioning film located in the positioning cavity or on one side of the positioning cavity, so that the protective film unit is adhered to the positioning cavity. In use, only the screen of the electronic device needs to be aligned with and placed into the positioning cavity, that is, the film applicator is sleeve on the screen of the electronic device so that the protective film unit is aligned with the screen of the electronic device, which is convenient for the user to apply the film on the screen of the electronic device and reduces the possibility of misalignment during the film application process, lowering the failure rate of misalignment.

## Description

### TECHNICAL FIELD

The present utility model relates to accessories of electronic devices, and more particularly to a film applicator, a protective film unit and a film applicator assembly.

### BACKGROUND

At present, to prevent the screens of electronic devices from cracking due to external force impact, protective films are usually applied to the screens of electronic devices, which can provide certain protection for the screens of electronic devices. Currently, the common way to apply protective films is that users purchase protective films and apply them to electronic devices by themselves. However, due to their inexperience in applying the films, they often end up with the films being misaligned on the screens, resulting in waste of the films and a poor user experience. Alternatively, a film applicator is usually fixed on the electronic device first, and the area for placing the protective film is defined on the device by the applicator. Then, the release film is removed from the protective film, and the protective film is placed in the designated area to complete the application. However, during the process of placing the protective film in the designated area after removing the release film, dust may stick to the exposed screen or protective film, and it is also easy to place the protective film inaccurately, which may lead to misalignment.

### SUMMARY OF THE DISCLOSURE

Based on this, it is necessary to provide a film applicator, a protective film unit and a film applicator assembly to reduce accumulation of dust during the process of applying the protective film to the screen of an electronic device, facilitate the user applying the protective film to the screen of an electronic device and improve the accuracy of the operation.

The present utility model provides a film applicator which comprises a main body comprising a positioning cavity for positioning an electronic device therein; and a positioning film located in the positioning cavity or at one side of the positioning cavity. The positioning film is connected to the main body. A protective film unit is connected to the main body via the positioning film. The protective film unit is adhesively connected to the positioning film.

The present utility model provides a protective film unit which comprises a protective film, a release film and a pull film. The release film is mounted on a side of the protective film. An end of the pull film is connected to an end of the release film.

The present utility model provides a film applicator assembly which comprises the protective film unit and the film applicator described above. A side of the protective film away from the release film is adhesively connected to the positioning film.

The beneficial effects of the film applicator, the protective film unit and the film applicator assembly provided by the embodiments of the present utility model are as follows: compared with the existing technology, the protective film unit is adhered to the film applicator via the positioning film located in the positioning cavity or on one side of the positioning cavity, so that the protective film unit is adhered to the positioning cavity. When applying the film, only the screen of the electronic device needs to be aligned with the positioning cavity and placed in it, that is, the film applicator is sleeve on the screen of the electronic device so that the protective film unit is aligned with the screen of the electronic device, which is convenient for the user to apply the film on the screen of the electronic device and reduces the possibility of misalignment during the film application process, lowering the failure rate of misalignment. In the protective film unit, one side of the protective film is adhered to the positioning film, the release film is attached to the other side of the protective film, and one end of the pull film is connected to one end of the release film. The user can pull the pull film to detach the release film from the protective film, so that the protective film adheres to the screen of the electronic device. By pressing the positioning film, the positioning film can be separated from the protective film, and finally the protective film is adhered to the screen of the electronic device. During the entire process of the release film being detached from the protective film, the film applicator is sleeved on the screen of the electronic device, and the screen of the electronic device and the protective film unit are not exposed to the external environment, so dust is less likely to accumulate between the protective film and the screen of the electronic device. Moreover, static electricity is generated when the release film is detached from the protective film, and the static electricity can attract dust and carry it away, further reducing the dust accumulated between the protective film and the screen of the electronic device, thereby increasing the success rate of film application.

Throughout the film application process, the operation is simple and convenient, and is easy for the user to perform. The protective film unit and the electronic device are fixed by the film applicator, reducing the possibility of misalignment during the film application process. At the same time, it reduces the entry of dust between the protective film and the screen of the electronic device, simplifies the film application process for the user, and improves the accuracy of the user's film application.

Additional aspects and advantages of the present utility model will be partly presented in the following description, and a part thereof will become apparent from the description below, or may be learned through the practice of the present utility model.

### BRIEF DESCRIPTION OF THE DRAWINGS

To more clearly illustrate the technical solutions in the embodiments of the present application or in the prior art, the following will provide a brief introduction to the accompanying drawings needed in the description of the embodiments or the prior art. It is obvious that the accompanying drawings described below are only some embodiments of the present application. For those skilled in the art, without making any creative efforts, other drawings can be obtained based on the structures shown in these drawings.
FIG. 1 is a perspective view of a main body of a film applicator in accordance with an embodiment of the present utility model;
FIG. 2 is an enlarged view of circled portion A of FIG. 1;
FIG. 3 is an enlarged view of circled portion B of FIG. 1;
FIG. 4 is an enlarged view of circled portion C of FIG. 1;
FIG. 5 is an exploded view of a film applicator assembly in accordance with an embodiment of the present utility model;
FIG. 6 is a structural diagram of the protective film unit installed on the film applicator according to a first embodiment of the present utility model;
FIG. 7 is an enlarged view of circled portion D of FIG. 6;
FIG. 8 is an enlarged view of circled portion E of FIG. 6;
FIG. 9 is a structural diagram of the protective film unit installed on the film applicator in accordance with a second embodiment of the present utility model;
FIG. 10 is an enlarged view of circled portion F of FIG. 9;
FIG. 11 illustrates a release film in accordance with an embodiment of the present utility model; and
FIG. 12 is an enlarged view of circled portion G of FIG. 9;
FIG. 13 is a structural diagram of the protective film unit installed on the film applicator in accordance with a third embodiment of the present utility model;
FIG. 14 is an exploded view of a film applicator assembly in accordance with an alternative embodiment of the present utility model;
FIG. 15 is a schematic diagram showing the cover being opened to expose the substrate of the film applicator assembly in the alternative embodiment of the present utility model;
FIG. 16 is a schematic diagram showing the pull film of the film applicator assembly being partly pulled in the alternative embodiment of the present utility model;
FIG. 17 is an exploded view of a film applicator assembly in accordance with another alternative embodiment of the present disclosure;
FIG. 18 is an exploded view of the film applicator of FIG. 17;
FIG. 19 is a front view of the film applicator of FIG. 17;
FIG. 20 is a cross-sectional view of FIG. 19 taken along line A-A;
FIG. 21 is an enlarged view of a circled portion B of FIG. 20.

### PREFERRED EMBODIMENTS

Before any independent embodiments are explained in detail, it is to be understood that the disclosure is not limited in its application to the details of construction and the arrangement of components set forth in the following description or illustrated in the following drawings. The disclosure is capable of other independent embodiments and of being practiced or of being carried out in various ways. Also, it is to be understood that the phraseology and terminology used herein is for the purpose of description and should not be regarded as limiting.

In addition, the terms "first" and "second" are only for the purpose of description and should not be regarded as indicating or implying relative importance or implying the quantity of technical features indicated. Therefore, the features limited to "first" and "second" can explicitly or implicitly include one or more features. In the description of this application, "multiple" means two or more, unless otherwise specified.

In the description of this specification, the terms such as "an embodiment", "some embodiments", "illustrative embodiment", "example", "specific example", or "some examples" are intended to indicate that the specific features, structures, materials, or characteristics described in connection with the embodiment or example are included in at least one embodiment or example of the present utility model. In this specification, the illustrative expressions of the above terms do not necessarily refer to the same embodiment or example. Moreover, the specific features, structures, materials, or characteristics described can be combined in any one or more embodiments or examples in a suitable manner.

In the description of the present utility model, it should be noted that unless otherwise expressly specified or limited, the terms "installed," "connected," or "coupled" should be interpreted in a broad sense. For example, the connection may be a fixed connection, a detachable connection, or an integral connection. It may be a mechanical connection or an electrical connection. The connection may be a direct connection or an indirect connection through an intermediate medium, and it may refer to the internal communication between two components or the interaction between them. Those of ordinary skill in the art can understand the specific meanings of the above terms in the utility model based on the actual context.

The present invention provides a film applicator assembly 10 configured to mount a protective film to screens of electronic devices, such as mobile phones, tablet computing devices and so on. In the illustrated embodiments, mobile phones are taken for an example.

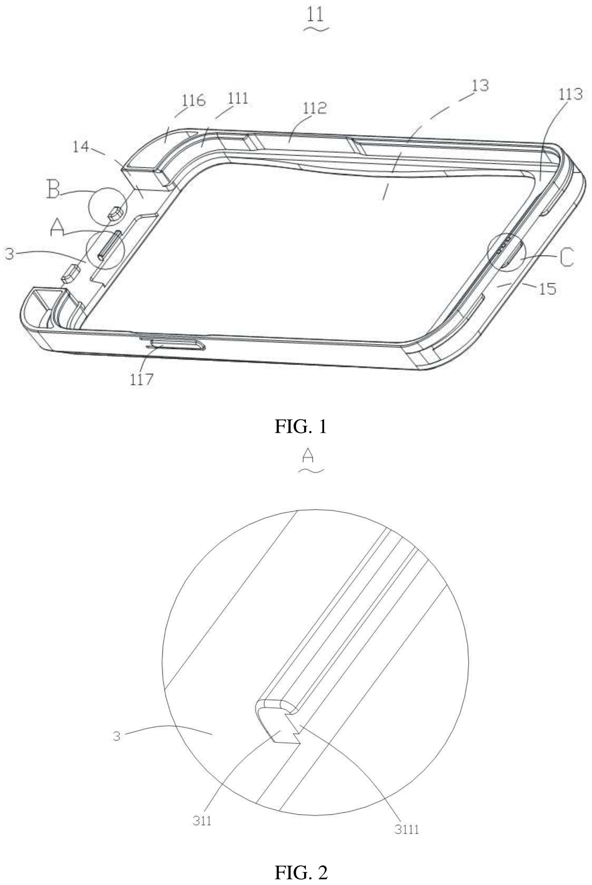

Referring to FIGS. 1-16, a film applicator assembly 10 in accordance with an embodiment of the present utility model comprises a protective film unit 2 and a film applicator 1. The film applicator 1 comprises a main body 11 which comprises a positioning cavity 111 configured to position an electronic device therein, and a positioning film 12 positioned in the positioning cavity 111 or located at one side of the positioning cavity 111. The positioning film 12 is connected to the main body 11. The protective film unit 2 is connected to the main body 11 via the positioning film 12. The protective film unit 2 is adhesively connected to the positioning film 12. The protective film unit 2 comprises a protective film 21, a releasable release film 22 and a pull film 23. The release film 22 is mounted on one side of the protective film 21. One end of the pull film 23 is connected to one end of the release film 22. The other side of the protective film 23 opposite to the release film 22 is adhered to the positioning film 12.

Specifically, the protective film unit 2 is adhesively connected to the film applicator 1 via the positioning film 12 which is positioned in the positioning cavity 111 or located at one side of the positioning cavity 111 and adheres the protective film unit 2 in the positioning cavity 111 of the film applicator 1. When there is a need to adhere the protective film to a screen of an electronic device, the screen of the electronic device is only needed to be aligned with and placed into the positioning cavity 111, that is, the film applicator 1 is sleeved on the screen of the electronic device, which results in the protective film unit 2 being aligned with the screen of the electronic device. It is convenient for the user to operate, and the error rate of misalignment made in the process of operation is reduced. One side of the protective film 21 of the protective film unit 2 is adhered to and connected with the positioning film 12, the release film 22 is connected to the other side of the protective film 21, and one end of the pull film 23 is connected with the end of the release film 22. The user pulls the pull film 23 to drive the release film 22 to separate from the protective film 21, so that the protective film 21 is attached to the screen of the electronic device. By pressing the positioning film 12 to separate the positioning film 12 from the protective film 21, the protective film 21 is firmly attached on the screen of the electronic device. During the whole process of the release film 22 moving away from the protective film 21, since the film applicator 1 is sleeved on the screen of the electronic device, the screen of the electronic device and the protective film unit 2 are not exposed to the external environment, dust is not easy to enter the gap formed between the protective film 21 and the screen of the electronic device. Furthermore, the release film 22 will produce static electricity when it is separated from the protective film 21, and the static electricity can attract dust, so as to take away the dust, further reduce the dust accumulated between the protective film 21 and the screen of the electronic device, so as to improve the success rate of attaching the protective film on the screen of the electronic device. The operation of attaching the protective film to the screen of the electronic device is simple and convenient. It is easy for the user to operate. The protective film unit 2 and the electronic device have been positioned and fixed by the film applicator 1, reducing the occurrence of the protective film offset from the screen of the electronic device, at the same time, reducing the chance of dust entering the gap between the protective film 21 and the screen of the electronic device, simplifying the user's operation, and improving the accuracy of operation.

Referring to Fig. 1, in the film applicator 1 of the embodiment of the present utility model, the main body 11 of comprises a sidewall 112 surrounding and delimiting the positioning cavity 111; or the main body 11 comprises a sidewall 112 and a bottom wall 113, the sidewall 112 surrounds a periphery of the bottom wall 113, and the sidewall 112 and the bottom wall 113 cooperatively form the positioning cavity 111.

Specifically, the sidewall 112 surrounds and delimits the positioning cavity 111 so that the protective film unit 2 adhered in the positioning cavity 111, is not prone to movement. The electronic device is then placed into the positioning cavity 111 which positions the electronic device therein, thereby achieving alignment of the protective film unit 2 with the screen of the electronic device. Alternatively, the sidewall 112 surrounds the bottom wall 113 to cooperatively form the positioning cavity 111, which ensures that the protective film unit 2, when adhered within the positioning cavity 111, is not prone to movement. The electronic device is then placed into the positioning cavity 111 which positions the electronic device therein, thereby achieving alignment of the protective film unit 2 with the screen of the electronic device.

Referring to Fig. 1, in the film applicator 1 of the embodiment of the present utility model, the bottom wall 113 defines an operation window 13 for exposing the positioning film 12 to outside the bottom wall 113 of the main body 11.

Specifically, the positioning film 12 is exposed to outside the bottom wall 113 of the main body 11 via the operation window 13, which allows the user to watch the process of mounting the protective film 12 to the screen of the electronic device and press the positioning film 12 during the process of operation. Thus, the process of mounting the protective film 12 to the screen of the electronic device is visual.

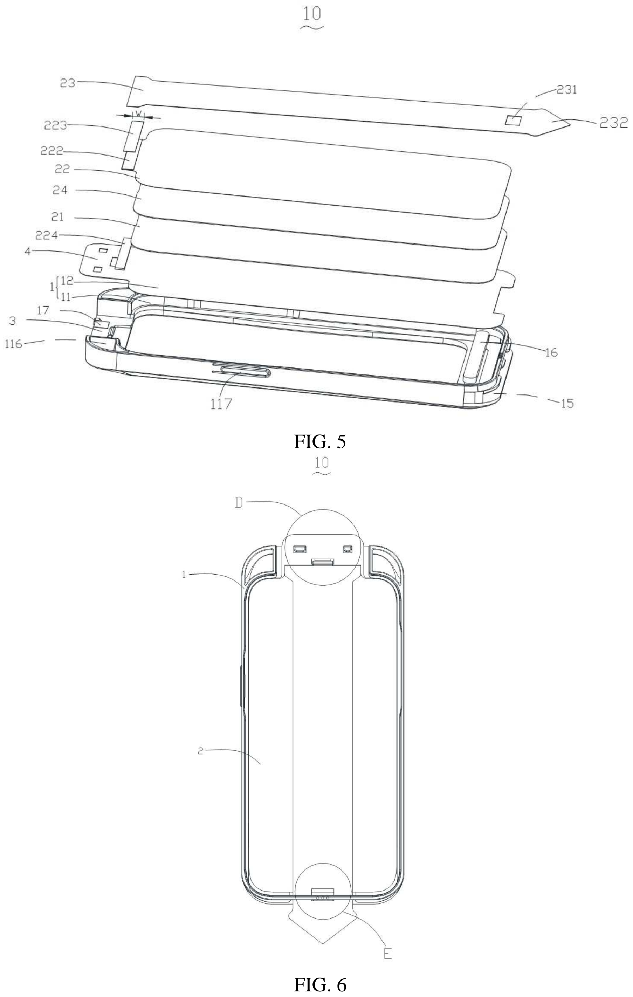

Referring to Figs. 5-7, in the film applicator 1 of the embodiment of the present utility model, the main body 11 further comprises a first positioning portion 3 arranged at the sidewall 112. The first positioning portion 3 is locate at one end of the positioning cavity 111. The positioning film 12 comprises a second positioning portion 4 formed at an end thereof. The positioning film 12 can be fixedly or detachably mounted to the main body 11 via cooperation of the first and second positioning portions 3 and 4.

Specifically, the first positioning portion 3 engages with the second positioning portion 4 such that the positioning film 12 can be fixedly or detachably mounted to the main body 11. When the first positioning portion 3 and the second positioning portion 4 are fixedly connected to each other, the positioning film 12 is fixed in the positioning cavity 111 or fixed at one side of the positioning cavity 111 so that the protective film unit 2 adhered to the positioning film 12 can also be fixed in the positioning cavity 111. When the first positioning portion 3 and the second positioning portion 4 are detachably connected to each other, the positioning film 12 can not only be mounted in the positioning cavity 111 or at one side of the positioning cavity 111 but also be replaceable.

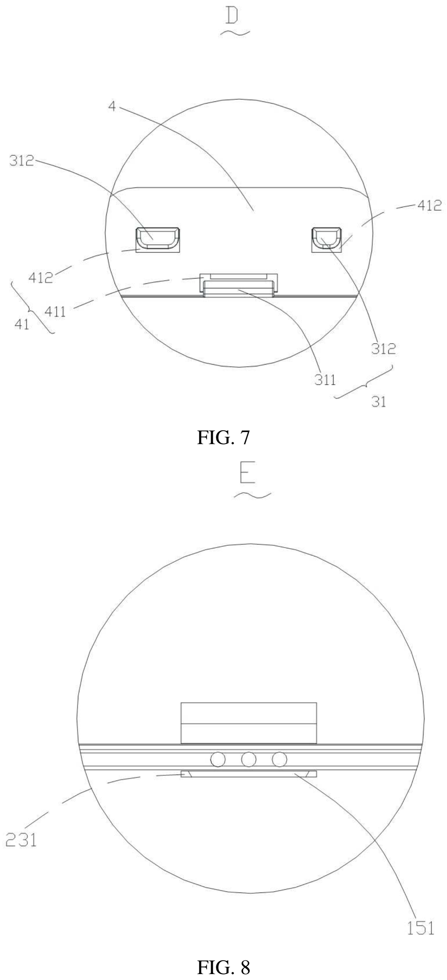

Referring to Figs. 6 and 7, in the film applicator 1 of the embodiment of the present utility model, the first positioning portion 3 comprises a first positioning protrusion 31, the second positioning portion 4 define a positioning hole 41. The first positioning protrusion 31 can be engaged in the positioning hole 41.

Specifically, the positioning hole 41 of the positioning film 12 is sleeved on the positioning protrusion 31 to cause the positioning film 12 to be fixed in the positioning cavity 111 or at one side of the positioning cavity 111 such that the protective film unit 2 is adhered in the positioning cavity 111 via the positioning film 2. When the positioning hole 41 of the positioning film 12 is disengaged from the positioning protrusion 31, the positioning film 12 can be removed away from the main body 11 to thereby allow replacement of the positioning film 12. Furthermore, the positioning film 12 is detachably connected to the positioning protrusion via the positioning hole 41, which makes the positioning film 12 omit the material of forming a detachable connection structure. The structure of the positioning film 12 is simplified.

Referring to Figs. 1, 2 and 7, in the film applicator 1 of the embodiment of the present utility model, the positioning protrusion 31 comprises a first positioning protrusion 311. The first positioning protrusion 311 comprises a barb 3111 formed at an end thereof away from the first positioning portion 3. The positioning hole 41 comprises a first positioning hole 411 which is sleeved on the first positioning protrusion 311 and disengagement of them is prevented by the barb 3111.

Specifically, the first positioning hole 411 is sleeved on the first positioning protrusion 311 and the barb 3111 formed at the end, away from the first positioning portion 3, of the first positioning protrusion 311 engages with the first positioning hole 411 to prevent the first positioning hole 411 escaping from the first positioning portion 3, thereby preventing the positioning film 12 from escaping from the main body 11.

Referring to Figs. 1, 2, 3, 6 and 7, in the film applicator 1 of the embodiment of the present utility model, the positioning protrusion 31 further comprises a second positioning protrusion 312. The second positioning protrusion 312 has a shape different from that of the first positioning protrusion 311; and/or the number of the second positioning protrusion 312 is two. Optionally, the two second positioning protrusions 312 have different shapes.

Specifically, in order to enhance the connection between the positioning film 12 and the main body 11, a second positioning protrusion 312 is provided, and the shape of the second positioning protrusion 312 is different from that of the first positioning protrusion 311, so that the orientation of the engaging position of the second positioning protrusion 312 where the second positioning protrusion 312 engages with the second positioning hole 412 is opposite to that of the engaging position of the first positioning protrusion 311 where the first positioning protrusion 311 engages with the first positioning hole 411. During the process of connecting the positioning film 12 to the main body 11, the positioning protrusion 311 and the second positioning protrusion 312 having different shapes is helpful to prevent the first positioning hole 411 corresponding to the first positioning protrusion 311 and the second positioning hole 412 corresponding to the second positioning protrusion 312 from being installed backwards, providing a fool-proof function. Thus, the correct connection between the positioning film 12 and the main body 11 can be achieved without error. Furthermore, there are two second positioning protrusions 312 with different shapes, which enhances the fool-proof effect and further ensures the correct connection between the positioning film 12 and the main body 11 can be made directly and accurately.

Referring to FIG. 1, in the film applicator 1 of the embodiment of the present utility model, the first positioning portion 3 defines an opening 14 which is in communication with the positioning cavity 111. The positioning protrusions 31 is formed on the bottom of the opening 14. The second positioning portion 4 is arranged in the opening 14.

Specifically, the second positioning portion 4 of the positioning film 12 is engaged with the first positioning portion 3 in the opening 14 which is in communication with the positioning cavity 111, which enable the positioning film 12 be placed horizontally and be fixed in the positioning cavity 111 or at one side of the positioning cavity 111 such that the protective film unit 2 is adhered in the positioning cavity 111, facilitating the film application process.

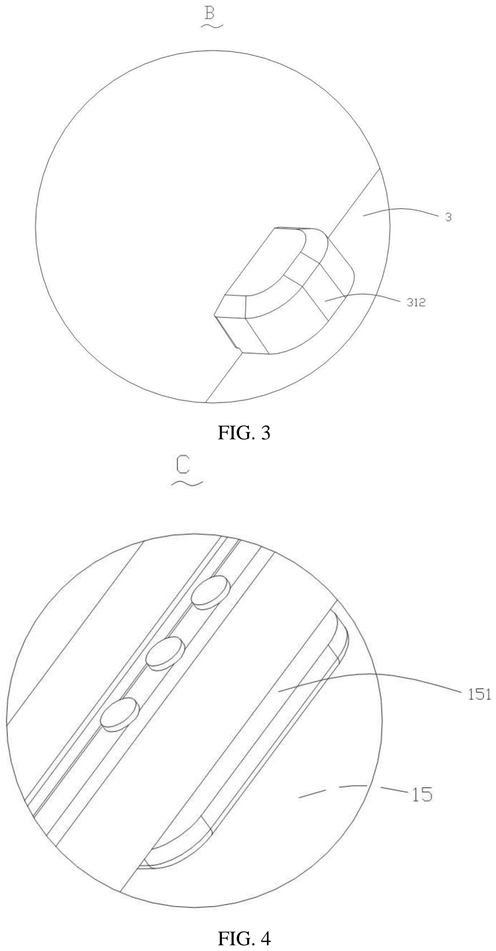

Referring to Fig. 1 and 4, the main body 11 further comprises a through slot 15 defined in the sidewall 112. The through slot 15 and the first positioning portion 3 are respectively arranged at opposite ends of the main body 11.

Specifically, the pull film 23 of the protective film unit 2 is capable of extending through the through slot 15 to outside the main body 11 so that the user can pull it to thereby remove the release film 22 away from the protective film 21. Thus, the release film 22 can be easily and conveniently removed away from the protective film 21 via pulling the pull film 23. The operation is simple and the efficiency is increased.

Referring to Fig. 5, the main body 11 further comprises an adjusting member 16 which is convexly arranged on a surface of the bottom wall 113 of the main body 11 facing the positioning film 12 and located at an end of the bottom wall 113 close to the through slot 15. Alternatively, the adjusting member 16 is convexly arranged on a surface of the positioning film 12 facing the bottom wall 113 of the main body 11 and located at an end of the positioning film 12 close to the through slot 15.

Specifically, the adjustment member 16 provides a pre-pressing effect on the positioning film 12. A side of the bottom wall 113 facing the positioning film 12 is provided with an adjustment member 16 or a side of the positioning film 12 facing the bottom wall 113 is provided with an adjustment member 16 such that one end of the positioning film 12 is higher than the other end of the positioning film 12. When the protective film 21 is mounted to the screen of the electronic device, i.e., the protective film 21 comes into contact with the screen of the electronic device, the end of the protective film 21 corresponding to the regulating member 16 contacts the screen of the electronic device first. Starting from this end, the protective film 21 gradually adheres to the screen of the electronic device, and air is progressively expelled towards the other end of the protective film 21 where no regulating member 16 is installed. Finally, the entire protective film 21 is attached to the screen. This method prevents the formation of air bubbles or trapped air that may occur when the entire protective film 21 contacts the screen simultaneously.

Referring to Figs. 1, 4, 6 and 8, a retaining protrusion 151 is convexly arranged on a wall of the through slot 15; and/or an end of the positioning film 12 away from the second positioning portion 4 is located at the through slot 15.

Specifically, the retaining protrusion 151 is convexly arranged at a side of the through slot 15 opposite to the positioning cavity 111. The retaining protrusion 151 is configured for engaging with the pull film 23 to thereby prevent the pull film 23 from being pulled randomly. Thus, the release film 21 being pulled randomly is avoided. When the pull film 23 is not in use, the pull film 23 is effectively protected from moving randomly, thereby avoiding the separation of the release film 22 from the protective film 21. The positioning film 12 is connected to the main body 11 via the second positioning portion 4 which is located at one end of the positioning film 12. The other end of the positioning film 12 extends into the through slot 15, which limits movement of the positioning film 12 to thereby prevent the other end of the positioning film 12 from falling away from the film applicator 1.

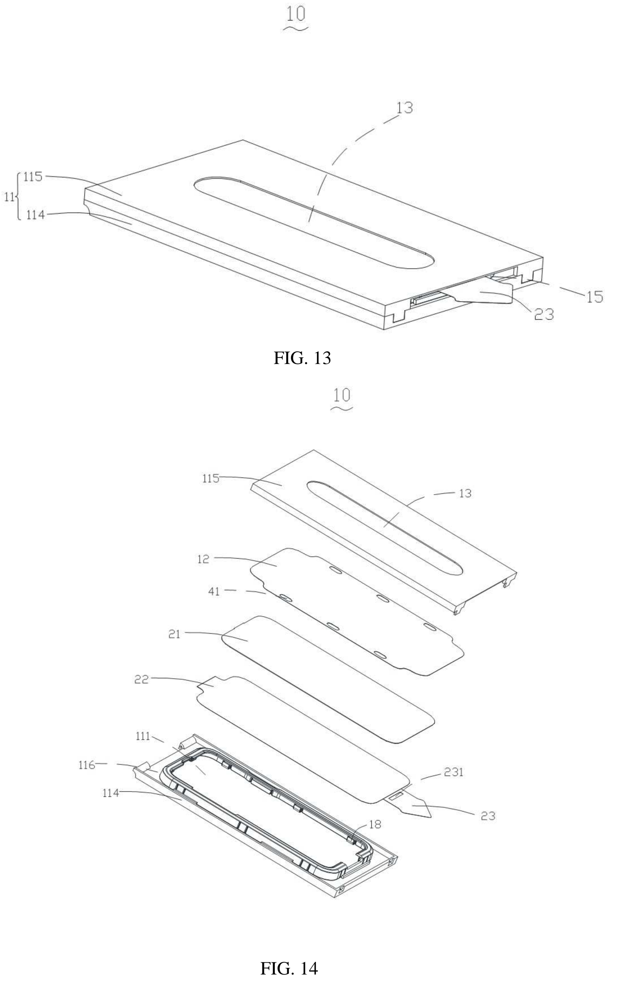

Referring to FIG. 13 and FIG. 14, in the film applicator 1 of this embodiment, the main body 11 comprises a substrate 114 and a cover 115 which are pivotably connected to each other. The positioning cavity 111 is defined in the substrate 114. The positioning film 12 is connected to the substrate 114 or the cover 115.

Specifically, when the positioning film 12 is connected to the substrate 114, the protective film unit 2 can be adhered to the film applicator 1 and positioned in the positioning cavity 111 via the positioning film 12 which is positioned in or one side of the positioning cavity 111. In operation, the screen of the electronic device facing the positioning cavity 111 is aligned with and placed into the positioning cavity 111, i.e., the substrate 114 is sleeved on the screen of the electronic device, which results in the protective film unit 2 being aligned with the screen of the electronic device. Misalignment due to errors of users in operation is avoided. The cover 115 is then rotated toward the substrate 114 to cover the side of the electronic device opposite to the screen. Thus, the electronic device is located between the cover 115 and the substrate 114. The user is capable of pulling the pull film 23 to make the release film 22 move away from the protective film 21 so that the protective film 21 can be mounted to the screen of the electronic device. By pressing the positioning film 12, the positioning film 12 can be separated from the protective film 21, ultimately allowing the protective film 21 to adhere to the screen of the electronic device. Since the electronic device and the protective film 21 are fixed in the film applicator 1 and not exposed to the external environment during the whole process of operation, the chance that dust enters a space between the protective film 21 and the screen of the electronic device is greatly reduced.

When the positioning film 12 is connected to the cover 15, the protective film unit 2 can be adhered to the film applicator 1 via the positioning film 12 and faces the positioning cavity 111. In operation, the screen of the electronic device aligning with the positioning cavity 111 is placed into the positioning cavity 111 with the screen of the electronic device facing away from the positioning cavity 111. When the cover 115 is rotated toward the substrate 114 to cover the screen of the electronic device, the electronic device is located between the cover 115 and the substrate 114 and the protective film unit 2 is aligned with the screen of the electronic device. Misalignment due to errors of users in operation cab be avoided. The user is capable of pulling the pull film 23 to detach the release film 22 away from the protective film 21 so that the protective film 21 can be mounted to the screen of the electronic device. The positioning film 12 can be separated from the protective film 21 via pressing the positioning film 12, allowing the protective film 21 to adhere to the screen of the electronic device. Since the electronic device and the protective film 21 are fixed in the film applicator 1 and not exposed to the external environment during the process of operation, the chance that dust enters the space between the protective film 21 and the screen of the electronic device is greatly reduced.

Referring to FIG. 13 and FIG. 14, in the film applicator 1 of this embodiment, the cover 115 defines an operation window 13 for exposing the positioning film 12 to outside of the cover 115.

Specifically, the positioning film 12 is exposed on the cover 115 through the operation window 13. This allows users to observe the process of applying the protective film 21 to the screen of the electronic device. Moreover, users can press the positioning film 12 through the operation window 13 during the operation process, thereby enabling visual operation of the film application.

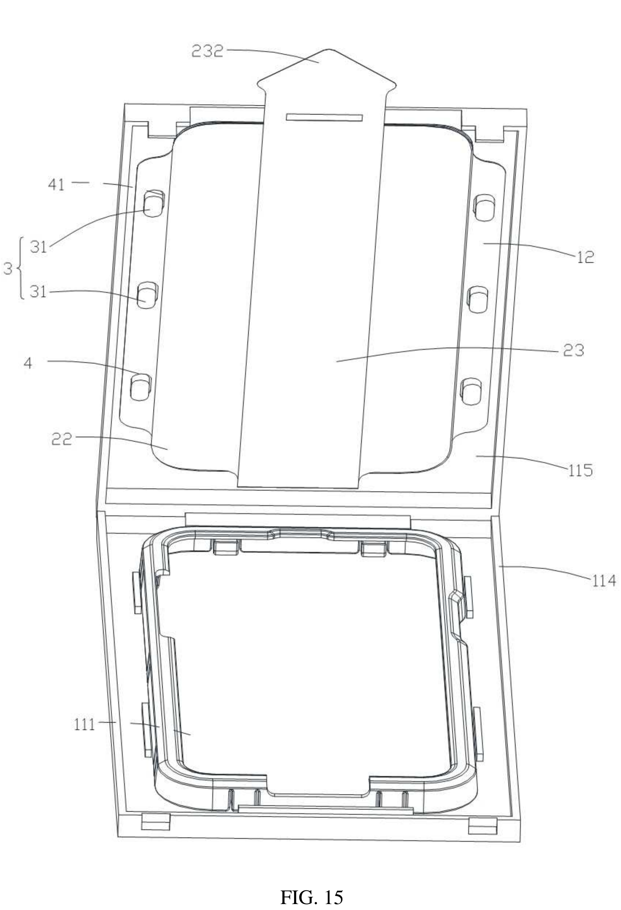

Referring to FIG. 15, in the film applicator 1 of this embodiment, the cover 115 comprises a first positioning portion 3 and the positioning film 12 comprises a second positioning portion 4. The positioning film 12 is fixedly or detachably connected to the cover 114 via cooperation of the first positioning portion 3 and the second positioning portions 4.

Specifically, the first positioning portion 3 cooperates with the second positioning portions 4 to fixedly or detachably connect the positioning film 12 to the cover 114. When the first positioning portion 3 is fixedly connected to the second positioning portion 4, the positioning film 12 is fixed to the inner side of the cover 115 so that the protective film unit 2 is adhered to the inner side of the cover 115 via the positioning film 12 and aligned with the positioning cavity 111. When the first positioning portion 3 is detachably connected to the second positioning portion 4, the positioning film 12 can not only be secured inside the cover 115 but also be replaceable.

Referring to FIG. 15, in the film applicator 1 of this embodiment, the first positioning portion 3 comprises a positioning protrusion 31, the second positioning portion 4 define a positioning hole 41. The positioning hole 41 is sleeved on the positioning protrusion 31.

Specifically, the positioning protrusion 31 is engaged in the corresponding positioning hole 41 to cause the positioning film 12 to be secured to inside the cover 115 so that the protective film unit 2 can be adhered to the cover 115 via the positioning film 12 and aligned with the positioning cavity 111. When the positioning protrusion 31 is disengaged from the positioning hole 41, the positioning film 12 can be removed away from the cover 115 to thereby allow replacement of the positioning film 12. Furthermore, the positioning holes 41 are formed at the positioning film 12, which makes the positioning film 12 omit material of forming a detachable connection structure. The structure of the positioning film 12 is simplified.

Referring to FIG. 15, in the film applicator 1 of this embodiment, multiple positioning protrusions 31 are provided. The multiple positioning protrusions 31 are arranged at opposite sides of the cover 115. Multiple positioning holes 41 are formed in the positioning film 2. The multiple positioning holes 41 are arranged at opposite sides of the positioning film 2 at positions corresponding to the positioning protrusions 31 respectively.

Specifically, when multiple positioning holes 41 are sleeved on the corresponding multiple positioning protrusions 31, the opposite sides of the positioning film 12 are fixed to the cover 115 to ensure that the positioning film 12 is limited within the cover 115 and not moveable freely, thereby limiting the protective film unit 2, which is adhered to the positioning film 12, within the cover 115. Thus, the cover 115 can be rotated towards the substrate 114 to precisely align the protective film unit 2 with the screen of the electronic device.

Referring to FIG. 13, in the film applicator 1 of this embodiment, the main body 11 further comprises a through slot 15. The through slot 15 is defined at an end of the main body 11 opposite to another end of the main body 11 where the substrate and the cover 115 are pivotably connected to each other.

Specifically, the free end of the pull film 23 of the protective film unit 2 extends through the through slot 15 to reach outside the main body 11. Thus, the pull film 23 can be pulled by the user pulling the free end of the pull film 23 to drive the release film 22 to detach from the protective film 21, facilitating the user's operation and improving the efficiency of operation.

Referring to FIG. 5, in this embodiment, the film applicator 1 further comprises an adhesive member 17 which is located between the first positioning portion 3 and the second positioning portion 4. The positioning film 12 is adhered to the main body 11 via the adhesive member 17.

Specifically, an adhesive member 17 is added between the first positioning portion 3 and the second positioning portion 4 to enhance the connection between the positioning film 12 and the main body 11 and to avoid the following situations: during the transportation of the film applicator assembly 10, the positioning film 12 being separated from the main body 11 due to the insufficient connection between the first positioning portion 3 and the second positioning portion 4, which will affect the usage effect; the positioning film 12 being separated from the main body 1 when it is pressed during the operation, which will affect the user's experience.

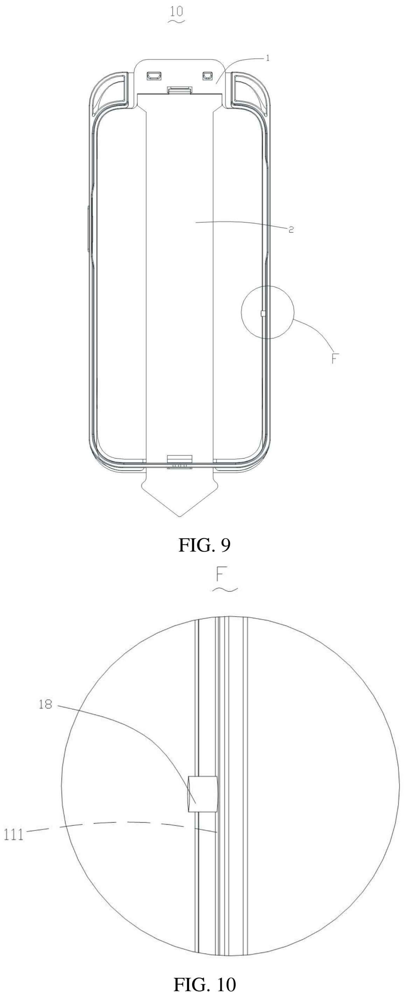

Referring to FIGS. 9, 10 and 14, in some embodiments, the film applicator 1 further comprises a retaining member 18 which is arranged on a side, facing the positioning cavity 111, of the sidewall of the positioning cavity 111.

Specifically, the retaining member 18 arranged on the sidewall of the positioning cavity 111 is configured for retaining the electronic device in the positioning cavity 111 and preventing the electronic device from shaking in the positioning cavity 111, which facilitates to precisely mount the protective film to the screen of the electronic device. Since the same machine produces two identical electronic devices, it cannot be guaranteed that the dimensions of the two electronic devices are exactly the same. There will be some tolerance. The retaining member 18 on the side wall of the positioning cavity 111 is adapted to the tolerance in the electronic device production process to ensure that the electronic devices with tolerance can be positioned in the same positioning cavity 111 properly.

Referring to FIGS. 9, 10 and 14, in some embodiments, the retaining member 18 comprises a deformable boss protruding from the sidewall of the positioning cavity 111 or an elastic structure which is fixed to or detachably connected to the sidewall of the positioning cavity 111.

Specifically, the retaining member 18 comprising a deformable boss or an elastic structure means the retaining member 18 has an elastic performance and is capable of being elastically deformed. Under the elastic action of the retaining member 18, i.e. when the deformation amount of the retaining member 18 is sufficiently large, the retaining member 18 provided on the sidewall of the first accommodation chamber 111 can press against electronic devices of different sizes or models within the positioning cavity 111, thereby facilitating the film-applying operation without the need to replace the film applicator.

Referring to FIGS. 1, 5 and 14, in some embodiments, the main body 11 further comprises a weight reduce structure 116 which comprises any one or more of groove structure, opening structure and avoid structure. In some embodiments, the main body 11 further comprises a press button 117.

Specifically, by reducing the weight of the film applicator 1 through the weight reducing structure 116, the transportation cost of the film applicator 1 can be reduced and the manufacturing cost of the film applicator 1 can be reduced too. Optionally, the weight reduction structure 116 is a groove structure, an opening structure, or a void structure, or a combination of two or more of groove structure, opening structure, and void structure.

Before applying the film, there is a need to clean the dust from the screen of the electronic device. If the button on the side wall of the electronic device is pressed, the screen will light up, making it not easy to see the dust on the screen and difficult to clean the dust on the screen, which is not conducive to subsequent film application operations. By setting the button structure 117 corresponding the button of the electronic device, it is possible to prevent the button on the side wall of the electronic device being pressed by the sidewall of the positioning cavity 111 when the electronic device is placed in the positioning cavity 111, thereby avoiding continuous illumination of the electronic device screen and affecting the cleaning work before film application. Moreover, users can operate the electronic device placed in the positioning cavity 111 through the button structure 117.

Referring to FIGS. 5 and 14, in some embodiments, the protective film unit 2 comprises a protective film 21, a release film 22 and a pull film 23. The release film 22 is mounted on one side of the protective film 21. One end of the pull film 23 is connected to one end of the release film 22.

Specifically, the user pulls the pull film 23 to drive the release film 22 to detach from the protective film 21, thereby allowing the protective film 21 to be adhered to the screen of the electronic device. Then, by pressing the positioning film 12 connected to the protective film 21, the positioning film 12 is separated from the protective film 21, and finally the protective film 21 is adhered to the screen of the electronic device. Preferably, the protective film 21 and the positioning film 12 are bonded and connected to each other via a low viscosity connection, so that the positioning film 12 can be easily separated from the protective film 21 by pressing the positioning film 12. Due to the fact that during the entire process of the release film 22 detaching from the protective film 21, the screen of the electronic device and the protective film unit 2 are both located within the film applicator 1, and the screen of the electronic device and the protective film unit 2 are not exposed to the external environment, dust cannot easily enter a space between the protective film 21 and the screen of the electronic device. Moreover, during the process of the release film 22 being detached from the protective film 21, static electricity will be generated and attract and take away dust, which further reduces the dust between the protective film 21 and the screen of electronic devices and reduces the failure rate of film application.

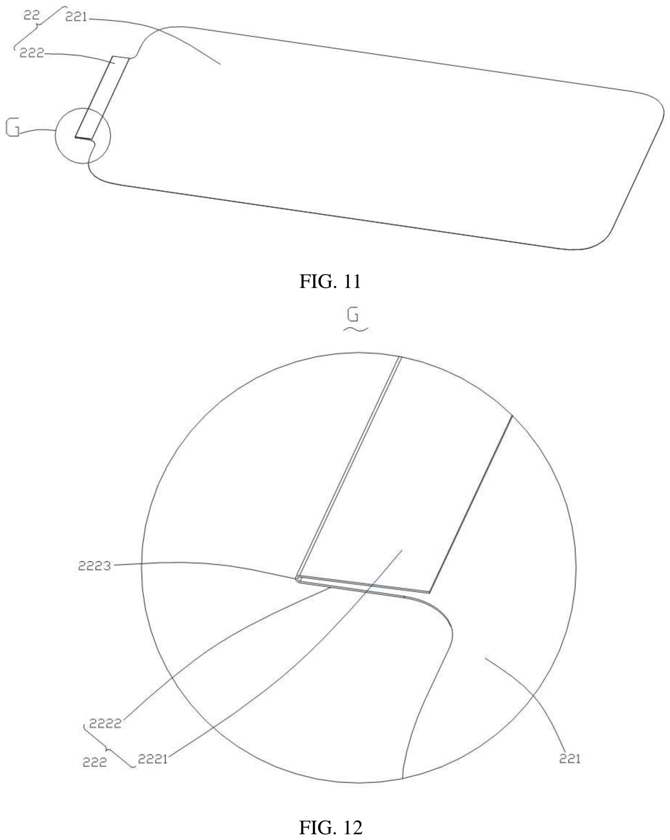

Referring to FIG. 11, in some embodiments, the release film 22 comprises a body 221 and a connection part 222. The body 221 is adhered to the protective film 21 and the connection part 222 is located outside the body 221. One end of the pull film 23 is connected to the connection part 222.

Specifically, the connection part 222 is located outside the body 221 and is not in contact with the protective film 21, which facilitates to detach the release film 22 from the protective film 21 via exerting a pulling force on the connection part 222. The pull film 23 is connected to the release film 22 via the connection part 222 so that when the pull film 23 is pulled, it is capable of easily detaching the release film 22 from the protective film 21 via pulling the connection part 222.

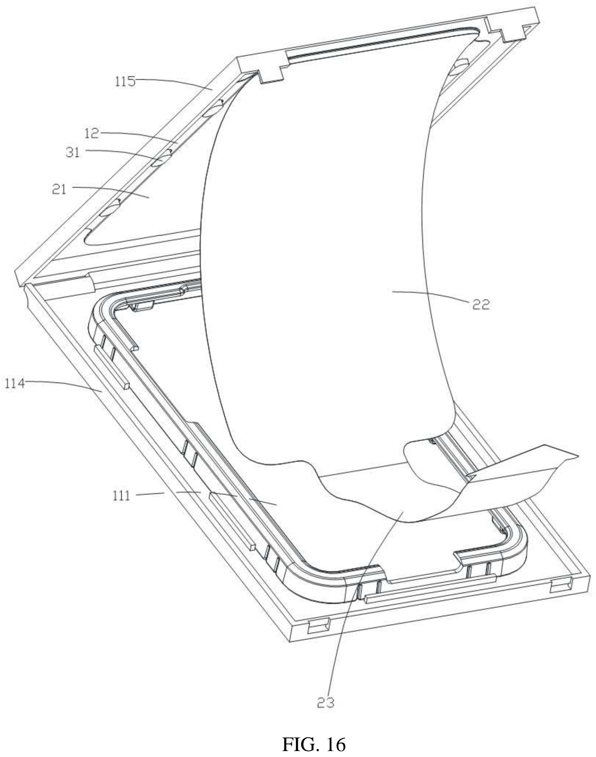

Referring to FIGS. 5 and 16, the end of the pull film 23 can be integrally formed with the connection part 222 as an integral structure; alternatively, the end of the pull film 23 can be adhered to the connection part 222, the end of the pull film 23 can be adhered to a side of the connection part 222 adjacent to the protective film 21.

Specifically, when one end of the pull film 23 is integrally formed with the connection part 222, it is convenient for production and involves fewer production processes; however, the production cost is high since cutting material is needed to form the integral structure and a lot of waste is generated during cutting process. When one end of the pull film 23 is adhered to the connection part 222, although the adhesive connection method increases the assembly process, the production cost is lower and less waste is generated during the production process, which is economical and environmentally friendly.

Referring to FIGS. 11 and 12, in this embodiment, the connection part 222 comprises a first section 2221, a second section 2222. The first section 2221 is located between the second section 2222 and the body 221. An end of the pull film 23 is connected to the second section 2222. The first section 2221 is configured to adhere to the positioning film 12 of the film applicator 1.

Specifically, one end of the pull film 23 is connected to the second section 2222 so that when the pull film 23 is pulled, it is capable of easily detaching the release film 22 from the protective film 21 via pulling the second connection section 222. The positioning film 12 of the film applicator 1 is connected to the first section 2221 so that the positioning film 12 is connected to the release film 22. Thus, during the transportation process, the release film 22 is not easy to be separated from the protective film 21 at the second section 2222. That is, the situation that the release film 22 is inadvertently detached from the protective film 21 by the second section 2222 during the transportation process is avoided. The connection between the release film 22 and the positioning film 12 provides better protection to the contacting surfaces of the protective film 21 and the release film 22. It can be understood that the positioning film 12 is connected with the first section 2221 through an adhesive member 224, so as to realize the connection between the positioning film 12 and the release film 22, and avoid the situation that the release film 22 is inadvertently detached from the protective film 21.

Referring to FIGS. 11 and 12, in the protective film unit 2 of the embodiment of the present utility model, a fold line 2223 is formed between the first section 2221 and the second section 2222. The second section 2222 can be folded relative to the first section 2221 along the fold line 2223, allowing the pull film 23 to be stacked on the release film 22.

Specifically, by means of the fold line 2223, the second connecting portion 2222 is folded relative to the first connecting portion 2221, thereby enabling the pull film 23 to be stacked on the release film 22. This effectively reduces the overall volume of the release film 22 and the pull film 23, lowering packaging costs while also providing greater convenience for user operation.

Referring to FIG. 5, in the protective film unit 2 of this embodiment, an end of the pull film 23 is connected to the connection part 222 of the release film 22. Preferably, the overlapped area between the end of the pull film 23 and the connection part 222 has a width in a range of 3mm to 20mm.

Specifically, if the width of the overlapped area between the end of the pull film 23 and the connection part 222 is less than 3 mm, the connection between the pull film 23 and the release film 22 will not be firm, resulting in a poor pulling effect when the pull film 23 is pulled to remove the release film 22. If the width of the overlapped area between the end of the pull film 23 and the connection part 222 is greater than 20 mm, it will result in a high production cost and a poor use experience when the pull film 23 is pulled to remove the release film 22. More preferably, the width of the overlapped area between the end of the pull film 23 and the connection part 222 is within a range of 4mm to 8mm. It can be understood that the end of the pull film 23 and the connection part 2222 can be connected by an adhesive member 223. The adhesive member 223 has a width W which is within a range of 3mm to 20mm, preferably, the width W is within a range of 4mm to 8mm.

Referring to FIGS. 5, 6, 9 and 13, in the protective film unit 2 of this embodiment, the other end of the pull film 23 extends beyond the protective film 21. The other end of the pull film 23 defines a through hole 231 and/or the other end of the pull film 23 is provided with a pull indicator 232.

Specifically, the other end of the pull film 23 extends beyond the protective film 21, which facilitates the user to pull the pull film 23 to remove the release film 22 from the protective film 21. The through hole 231 of the pull film 23 engages with the retaining protrusion 151 to cause the pull film 23 to be retained by the retaining protrusion 151, thereby preventing the pull film 23 from moving arbitrarily. When the pull film 23 is not moved, the pull film 23 is prevented from moving arbitrarily to detach the release film 22 from the protective film 21. Under the guidance of the pull indicator 232 of the pull film 23, users are led to perform correct film application operations, the pull indicator 232 enabling users to understand that the pull film 23 needs to be pulled before starting the film application process.

Referring to FIG. 5, the protective film unit 2 of this embodiment further comprises an adhesive layer 24. The release film 22 is adhered to the protective film 21 by the adhesive layer 24. The adhesive force formed between the adhesive layer 24 and the protective film 21 is greater than the adhesive force formed between the adhesive layer 24 and the release film 22.

Specifically, the adhesive force formed between the adhesive layer 24 and the protective film 21 is greater than the adhesive force formed between the adhesive layer 24 and the release film 22, which ensures that the release film 22 can be removed from the protective film 21 while maintaining the adhesive layer 24 on the protective film 21 such that the protective film 21 can be adhered to the screen the electronic device by the adhesive layer 24. As an example, the adhesive layer 24 can be made of AB glue which is composed of OCA optical glue and silica gel. OCA optical glue has a viscosity greater than that of silica gel. The layer of AB glue made of OCA optical glue is adhered to the protective film 21 while the other layer of AB glue made of silica gel is adhered to the release film 22.

Referring to FIGS. 6, 9 and 13, a film applicator assembly 10 is provided. The film applicator assembly 10 comprises a protective film unit 2 described above and a film applicator 1 described above. The side of the protective film 21 away from the release film 22 is adhered to the positioning film 12.

Specifically, the film application assembly 10 which is assembled by the protective film unit 2 and the film applicator 1 of the above embodiments, reduces the chance that the protective film is misaligned with the screen of the electronic device during operation. At the same time, the possibility of dust entering the gap between the protective film 21 and the screen of the electronic device is lowered. The film application assembly 10 facilitates users performing film application operations and improves the accuracy of the film application operation.

Referring to FIG. 6, 9 and 13, in some embodiments, the other end of the pull film 23 is capable of extending out of the main body 11 via the through slot 15; or the other end of the pull film 23 comprises a storage state and a use state, when the other end of the pull film 23 is at the storage state, the other end of the pull film 23 is located within the main body 11. When the other end of the pull film 23 is at the use state, the other end of the pull film 23 extends out of the main body 11 via the through slot 15.

Specifically, one end of the pull film 23 is connected to one end of the release film 22, and the other end of the pull film 23 extends out of the main body 11 through the through slot 15, facilitating the user to pull the pull film 23 to detach the release film 22 from the protective film 21. Pulling the pull film 23 will cause the release film 22 and the protective film 21 to separate, and dust may be adhered to the separated protective film 21 and trapped between the screen of the electronic device and the protective film 21, making the film application process inconvenient. Therefore, in the storage state, the other end of the pull film 23 is located inside the main body 11, which ensures that the pull film 23 is not pulled when not in use. When in the usage state, the other end of the pull film 23 can extend out of the main body 11 through the through slot 15, facilitating the user to pull the pull film 23 to detach the release film 22 from the protective film 21.

Referring to FIG. 6 and 8, the other end of the pull film 23 defines a through hole 231. A retaining protrusion 151 is convexly arranged on a side of the through slot 15 away from the positioning cavity 111. The other end of the pull film 23 extends out of the main body 11 via the through slot 15. The through hole 231 of the pull film 23 is sleeved on the retaining protrusion 151, to thereby maintain the other end of the pull film 23 being located outside the main body 11.

Specifically, the retaining protrusion 151 is engaged in the through hole 231 of the pull film 23 to cause the pull film 23 to be retained by the retaining protrusion 151. Thus, the pull film 23 is prevented from being moved randomly. When the pull film 23 is not in use, the full film 23 is protected, thereby effectively preventing the full film 23 from being moved randomly to detach the release film 22 from the protective film 21, preventing dust being adhered to the separated protective film 21 and trapped between the screen of the electronic device and the protective film 21, and reducing the inconvenience of operation. In use, the user can operate the other end of the pull film 23 extending out of the main body 11 to disengage the retaining protrusion 151 from the through hole 231 of the pull film 23 and detach the release film 22 from the protective film 21.

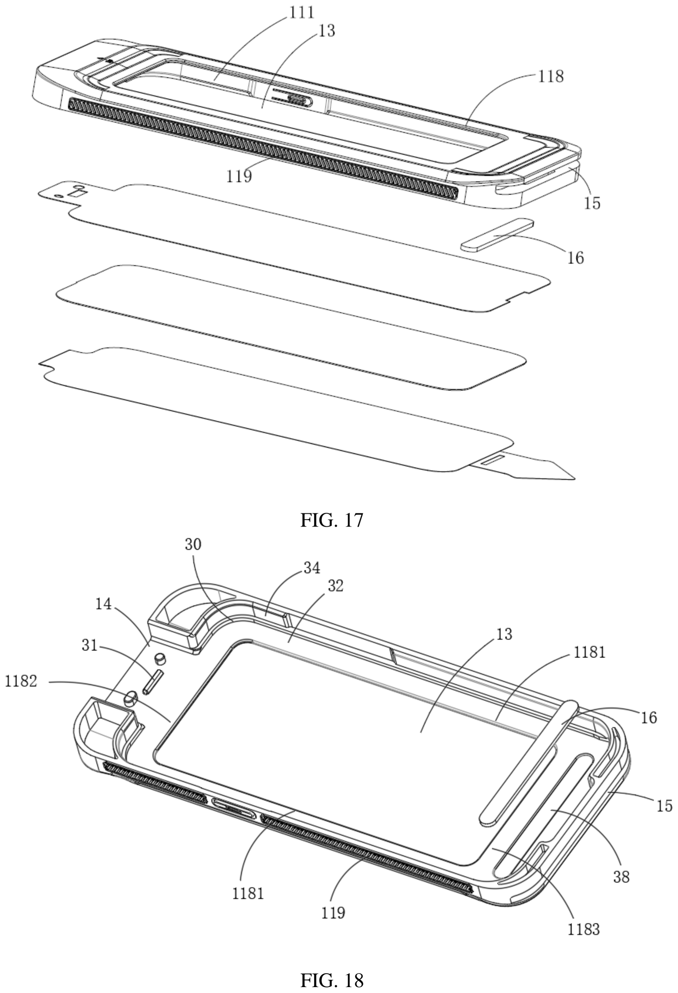

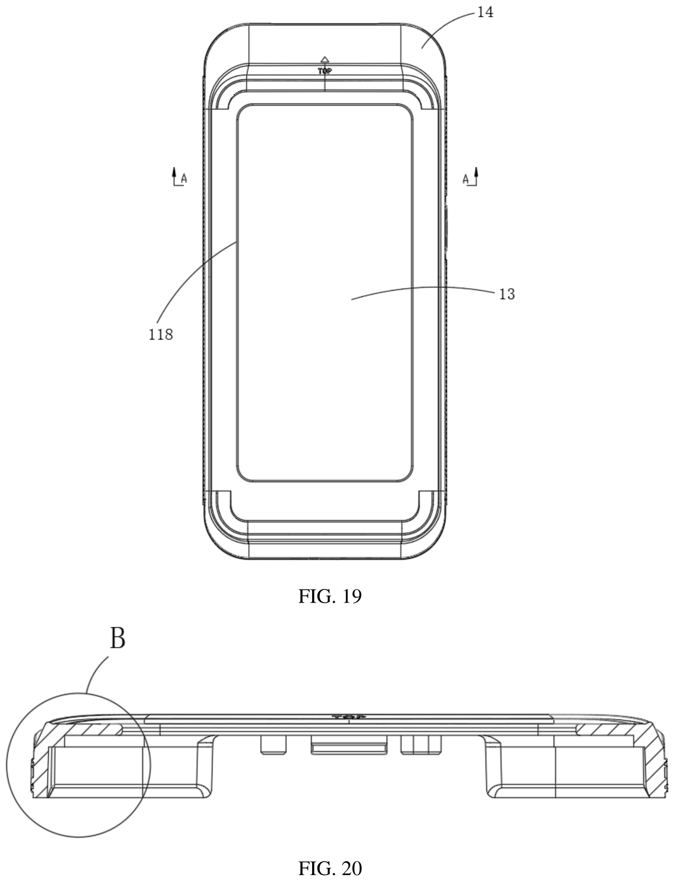

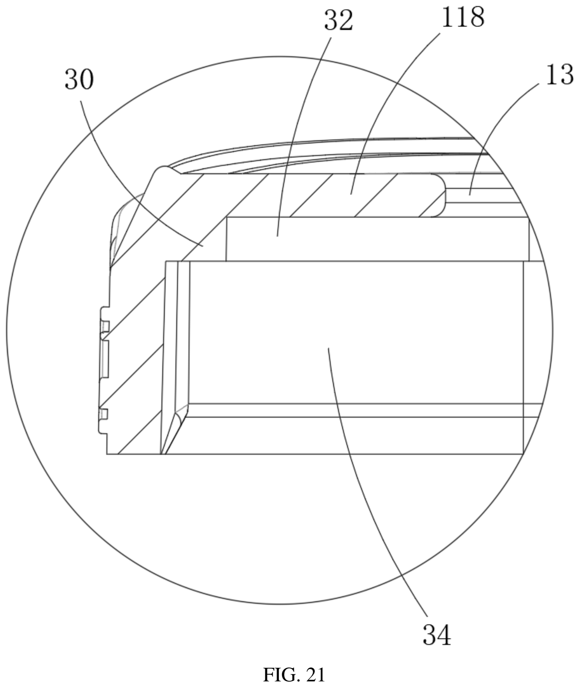

As shown in Figs. 17-21, the present application provides a film applicator assembly. The film applicator assembly can be used to apply a protective film to a screen of an electronic device, such as a mobile phone, a tablet computer, etc., and a mobile phone is taken as an example in this embodiment. The film applicator assembly comprises a film applicator 1 and a protective film unit. The film applicator 1 comprises a main body 11 and a void structure running through the front and back sides of the main body 11. The void structure comprises a positioning cavity 111 and an operation window 13 facing and being communicated with the positioning cavity 111. The protective film unit is positioned and fixed on one side of the positioning cavity 111 close to the operation window 13. The protective film unit comprises a release layer, a protective film and a pull film connected sequentially in that order. The protective film is positioned at a side adjacent to the operation window 13 and located between the positioning film and the release film.

The inner sidewall of the void structure is provided with an inner extension portion 118 which is arranged perpendicularly on the sidewall of the void structure. The inner extension portion 118 is arranged along a circumferential direction of the operation window 13 to thereby surround and delimit the operation window 13, and the positioning cavity 111 is located at one side of the inner extension portion 118 and the operation window 13. By arranging the inner extension portion 118, the overall structural strength of the main body 11 can be enhanced, in particular, the structural strength of the left and right side portions of the sidewall of the main body 11 can be significantly enhanced, and the deformation of the main body 11 in the process of mounting the protective film is avoided, so that the problems such as the protective film being blocked and the protective film falling out caused by the deformation of the operation window 13 is avoided. The protective film is prevented from being stuck to affect air exhaust during the process of operation. Furthermore, during the process of the release film being detached from the protective film, the inner extension portion 118 can block the protective film and prevent the protective film from warping, to thereby avoid randomly and disorderly air exhaust due to the protective film touches the screen of the electronic device when it is warped and rebounded. At the same time, the area of the operation window 13 is reduced due to arrangement of the inner extension portion 118. The area of the operation window 13 is smaller than the area of the protective film. Thus, the inner extension portion 118 has a limiting function and the protective film unit is limited in the positioning cavity 111 by the inner extension portion 118. The problems such as the protective film being stuck and the protective film falling out are completely avoided. The exhaust air visualization in the operation is achieved.

More specifically, as shown in FIGS. 2 and 6, a step 30 is formed between the inner extension portion 118 and the sidewall of the positioning cavity 111. The step 30 is located at the connecting corner of the inner extension portion 118 and the sidewall of the main body 11. Preferably, the step 30 and the main body 11 and the extension portion 118 are integrally formed of the same material. The step 30 divides the positioning cavity 111 into a first accommodation chamber 32 for accommodating the protective film unit and the second accommodation chamber 34 for accommodating a mobile phone. The first accommodation chamber 32 is located between the operation window 13 and the second accommodation chamber 34.

Preferably, the inner extension part 118 and the main body 11 are integrally formed as a single unitary structure. The inner extension part 118 extends inwardly from the inner surface of the sidewall of the main body 11, and it can also say that the inner extension part118 extends inwardly from the inner surface of the step 30.

In the illustrated embodiment, a plurality of recessed portions is arranged on the sidewall of the second accommodation chamber 34. The recessed portions are arranged corresponding to convex parts disposed on sides of the mobile phone such as buttons, so that the mobile phone can be stably accommodated in the second accommodation chamber 34 and the accuracy of applying the protective film to the mobile phone is ensured.

In the illustrated embodiment, the film applicator 1 further comprises an adjusting member 16 which is arranged at the bottom of one side of the inner extension part 118 facing the positioning cavity 111. The adjusting member 16 is an elastic foam for example. Further, the inner surface of the inner extension part 118 defines a mounting slot 38. The adjusting member 16 is mounted in the mounting slot 38 and at least a part of the adjusting member 16 protrudes out of the mounting slot 38.

Referring to Fig. 4, in this embodiment, the main body 11 has a rectangular structure, and the area of the operation window 13 is 60% to 75% of the area of the protective film. Specifically, the inner extension part 118 includes two side sections 1181 which are disposed on opposite sides of the operation window 13 in a width direction of the main body 11, and an upper section 1182 and a lower section 1183 which are disposed on the other opposite sides of the window 13 in a length direction of the main body 11. The width of the upper section 1182 and the side sections 1181 extending into the operation window 13 is 6mm~10mm. The width of the two side sections 1181 is greater than 6mm, which can limit the protective film 21 in the main body 11 of the film applicator 1 and prevent the protective film 21 from being deformed when the release film 22 is detached from the protective film 21. The width of the two side sections 1181 is less than 10mm, which can ensure that the visual area of the main body 11 is large enough to allow the user to see the air exhaust process of the major area under the protective film 21 and avoid the situation where the bubbles under the protective film 21 cannot be seen. The adjusting member 16 is disposed on the lower section 1183. Correspondingly, the mounting slot 38 is defined in the lower section 1183, and the width of the lower section 1183 extending into the operation window 13 is 15mm~20mm. In this case, the area of the operation window 13 is set within a reasonable range, which can effectively solve the problem, that the main body is unstable due to an oversized window, existed in conventional products, and can also realize the visualization of the film application process.

In the illustrated embodiment, as shown in Fig. 2, one end of the main body 11 opposite to the adjusting member 16 defines an opening 14 in communication with the positioning cavity 111. That is, the bottom surface of the opening 14 and the bottom surface of the first accommodation chamber 32 of the positioning cavity 111 are located on the same plane, and the opening 14 passes through the top of the main body 11. A positioning protrusion 31 is formed on the bottom surface of the opening 14. The positioning protrusion 31 can be consisted of multiple pillar structures distributed at an interval. Correspondingly, one end of the positioning film 12 extends outwardly to form a positioning portion. The positioning portion defines multiple positioning holes corresponding to the positioning protrusions 31. The positioning protrusions 31 are engaged in the positioning holes of the positioning film 12 to thereby position and fix the protective film unit in the first accommodation chamber 32.

As shown in Figure 3, the end of the release film 22 opposite to the positioning portion is provided with a pull film. The pull film extends outwardly from the end of the release film, is then bent toward a side away from the protective film, and extend in a reverse direction until the distal end of the pull film extends out of the main body. The end of the main body 11 adjacent to the adjustment member 16 defines a through slot 15 to allow the pull film and the release film to pass therethrough. The through slot 15 is arranged corresponding to the first accommodation chamber 32. When the protective film unit 2 is placed in the first accommodation chamber 32, the distal end of the pull film 23 extends out of the through slot 15 such than users can pull it.

In the illustrated embodiment, two outer surfaces, opposite to each other in a width direction of the main body 11, of the main body 11 are provided with anti-slip structure 119 such as anti-slip ribs, in order to increase the friction force between the user's fingers and the main body 11 and allow the user to hold the main body 11 more firmly.

Optionally, the main body 11 defines voids. As an example, the voids are arranged at four corners of the main body 11 respectively in order to reduce the weight of the main body 11.

The film application process using the film applicator of the present invention is introduced as follows:
The protective film unit is firstly placed in the first accommodation chamber 32 with the positioning hole being sleeved on the positioning protrusion 31 and the distal end of the pull film extending out of the through slot 15. The main body 11 is then sleeved on a mobile phone to be applied with a protective film, the screen of the mobile phone facing upward and a gap being formed between the screen of the mobile phone and the protective film unit. At this time, the adjusting member 16 applies a preload force on the bottom end of the protective film unit to make the bottom end of the protective film unit abut against the screen of the mobile phone. The main body 11 is fixed and the pull film 23 is pulled outwards and slightly upwards to detach the release film 22 from the protective film 21. At this time, the pull film 23 presses the adjusting member 16 upwards to make the adjusting member 16 to be compressed upwards to relieve the preload force on the protective film unit 2. After the release film 22 is torn off, the adjusting member 16 quickly restores to its original shape and extends downwards to make the protective film immediately contact the screen of the mobile phone, and exhausts air between the protective film 21 and the display screen of the mobile phone from the end close to the adjusting member 16 to the opposite end away from the adjusting member 16. Thus, the protective film is attached to the screen of the mobile phone.

During the process of applying the protective film to the display screen of the mobile phone mentioned above, the use of the adjusting member 16 can prevent the pull film 23 from being squeezed when the release film 22 is being pulled away from the protective film 21, thereby preventing the pull film 23 from getting stuck. After the release film 22 is removed from the protective film 21, the adjusting member 16 is capable of driving the protective film 21 to contact the display screen of the mobile phone immediately, thereby automatic exhausting air between the protective film 21 and the display screen of the mobile phone from the end close to the adjusting member 16 to the opposite end away from the adjusting member 16. Generation of bubbles between the protective film 21 and the display screen of the mobile phone is avoided.

The contents described above are only preferred embodiments of the present disclosure, but the scope of the present disclosure is not limited to the embodiments. Any ordinarily skilled in the art would make any modifications or replacements to the embodiments in the scope of the present disclosure, and these modifications or replacements should be included in the scope of the present disclosure. Thus, the scope of the present disclosure should be subjected to the claims.

## Claims

1. A film applicator, **characterized by** comprising:
a main body comprising a positioning cavity for positioning an electronic device therein; and
a positioning film located in the positioning cavity or at one side of the positioning cavity, the positioning film being connected to the main body such that a protective film unit can be connected to the main body via the positioning film.

2. The film applicator according to claim **1, characterized in that** the main body comprises a sidewall surrounding and delimiting the positioning cavity; or
the main body comprises a bottom wall and a sidewall surrounding the bottom wall, the bottom wall and the sidewall cooperatively forming and delimiting the positioning cavity.

3. The film applicator according to claim **2, characterized in that** the bottom wall defines an operation window to expose the positioning film outside the bottom wall.

4. The film applicator according to claim **2, characterized in that** the main body comprises a first positioning portion formed at the sidewall thereof, the first positioning portion being located at an end of the positioning cavity; and
the positioning film comprises a second positioning portion, the positioning film being fixedly or detachably connected to the main body via the first positioning portion cooperating with the second positioning portion.

5. The film applicator according to claim **4, characterized in that** the first positioning portion comprises a positioning protrusion; and
the second positioning portion comprises a positioning hole in which the positioning protrusion is received.

6. The film applicator according to claim **5, characterized in that** the positioning protrusion comprises a first positioning protrusion which has a hook structure formed at an end thereof away from the first positioning portion; and
the positioning hole comprises a first positioning hole sleeved around the first positioning protrusion, the hook structure blocking the first positioning protrusion disengaging from the first positioning hole.

7. The film applicator according to claim **6, characterized in that** he positioning protrusion further comprises a second positioning protrusion, the first positioning protrusion and the second positioning protrusion having different shapes; and/or the number of the second positioning protrusion is two, the two second positioning protrusions have different shapes.

8. The film applicator according to any one of claims **4-7, characterized in that** the first positioning portion comprises an opening in communication with the positioning cavity, the positioning protrusion is arranged on a bottom wall of the opening, and the second positioning portion is arranged in the opening.

9. The film applicator according to any one of claims **4-7, characterized in that** the main body further comprises a through slot defined in the sidewall thereof, and the through slot and the first positioning portion are respectively located at opposite ends of the sidewall.

10. The film applicator according to claim **9, characterized in that** the main body further comprises an adjusting member, the adjusting member being convexly arranged on a side of the bottom wall facing the positioning film and located at an end of the bottom wall adjacent to the through slot; or the adjusting member being convexly arranged on a side of the positioning film facing the bottom wall and located at an end of the positioning film adjacent to the through slot.

11. The film applicator according to claim **9, characterized in that** a retaining protrusion is convexly arranged on an edge of the through slot away from the positioning cavity; and/or an end of the positioning film away from the second positioning portion is located at the through slot.

12. The film applicator according to claim **1, characterized in that** the main body comprises a substrate and a cover which are rotatably connected to each other, the positioning cavity is formed in the substrate, and the positioning film is connected to the substrate or the cover.

13. The film applicator according to claim **12, characterized in that** the cover defines an operation window to expose the positioning film outside the cover.

14. The film applicator according to claim **12, characterized in that** the cover comprises a first positioning portion, the positioning film comprises a second positioning portion, and the positioning film is fixedly or detachably connected to the cover via the first positioning portion cooperating with the second positioning portion.

15. The film applicator according to claim **14, characterized in that** the first positioning portion comprises a positioning protrusion, the second positioning portion comprises a positioning hole in which the positioning protrusion is received.

16. The film applicator according to claim **15, characterized in that** multiple positioning protrusions are arranged at opposite ends of the cover respectively, and multiple positioning holes are arranged at opposite ends of the positioning film and correspond to the multiple positioning protrusions respectively.

17. The film applicator according to claim **12, characterized in that** the main body further comprises a through slot defined at a sidewall thereof, and the through slot is defined at an end of the main body away from a joint where the cover and the positioning base are connected.

18. The film applicator according to any one of claims **4-7** or **14-17, characterized in that** the film applicator further comprises an adhesive member which is located between the first positioning portion and the second positioning portion, and the positioning film is adhered to the main body via the adhesive member.

19. The film applicator according to any one of claims **1-7** or **12-17, characterized in that** the film applicator further comprises a retaining member which is arranged on a side, facing the positioning cavity, of the sidewall of the positioning cavity.

20. The film applicator according to claim **19, characterized in that** the retaining member comprises a deformable boss protruding from the sidewall of the positioning cavity; or the retaining member comprises an elastic structure which is fixed to or detachably connected to the sidewall of the positioning cavity.

21. The film applicator according to any one of claims **1-7** or **12-17, characterized in that** the main body comprises a weight reduce structure which comprises any one or more of groove structure, opening structure and avoid structure; or
the sidewall of the cavity is provided with a press button.

22. A protective film unit, **characterized by** comprising a protective film, a release film and a pull film, wherein the release film is mounted to a side of the protective film, and an end of the pull film is fixed to an end of the release film.

23. The protective film unit according to claim **22, characterized in that** the release film comprises a body adhered to the protective film and a connection part located outside of the protective film; and the pull film comprises an end connected to the connection part of the release film.

24. The protective film unit according to claim **23, characterized in that** the end of the pull film and the connection part of the release film are integrally formed as an integral structure; or
the end of the pull film is adhesively connected to the connection part of the release film, the end of the pull film being adhered to a side of the connection part of the release film adjacent to the protective film.

25. The protective film unit according to claim **24, characterized in that** the connection part comprises a first section and a second section, the first section is located between the second section and the body, the end of the pull film is connected to the second section, and the first section is configured to be connected to a positioning film of a film applicator.

26. The protective film unit according to claim **25, characterized in that** a fold line is formed between the first section and the second section, the second section is foldable about the fold line relative to the first section, allowing the pull film to be stacked on the release film.

27. The protective film unit according to claim **23, characterized in that** the end of the pull film is adhesively connected to the connection part of the release film, and an overlapped area between the end of the pull film and the connection part has a width in a range of 3mm to 20mm.

28. The protective film unit according to any one of claims **22-27, characterized in that** the other end of the pull film extends beyond the protective film; the other end of the pull film defines a through hole and/or the other end of the pull film is provided with a pull indicator.

29. The protective film unit according to any one of claims **22-27, characterized in that** the protective film unit further comprises an adhesive layer, the release film is adhered to the protective film by the adhesive layer, the adhesive force formed between the adhesive layer and the protective film is greater than the adhesive force formed between the adhesive layer and the release film.

30. A film applicator assembly, **characterized by** comprising the protective film unit according to any one of claims **22-29** and the film applicator according to any one of claims **1-21,** wherein a side of the protective film away from the release film is adhesively connected to the positioning film.

31. The film applicator assembly according to claim **30, characterized in that** the other end of the pull film extends out of the main body via the through slot of the main body; or
the other end of the pull film comprises a storage state and a use state, when the other end of the pull film is at the storage state, the other end of the pull film is located within the main body, when the other end of the pull film is at the use state, the other end of the pull film extends out of the main body via the through slot of the main body.

32. The film applicator assembly according to claim **30, characterized in that** the other end of the pull film defines a through hole, a retaining protrusion is convexly arranged at a side of the through slot away from the positioning cavity, the other end of the pull film extends out of the main body via the through slot of the main body, and the retaining protrusion is engaged in the through hole such that the other end of the pull film remains extended out of the main body.

33. A film applicator, **characterized by** comprising:
a main body;
a void structure extending through the main body, the void structure comprising a positioning cavity and an operation window in communication with the positioning cavity, the sidewall of the void structure is provided with an inner extension portion, the inner extension portion surrounds and delimit the operation window, and the positioning cavity is located at one side of the inner extension portion and the operation window.

34. The film applicator according to claim **33, characterized in that** the inner extension portion comprises two side sections which are disposed opposite to each other in a width direction of the main body, and an upper section and a lower section which are disposed opposite to each other in a length direction of the main body.

35. The film applicator according to claim **34, characterized in that** the width of the upper section and the side sections is in a range of 6mm~10mm, and the width of the lower section is in a range of 15mm~20mm.

36. The film applicator according to claim **34 or 35, characterized in that** a side of the lower section facing the positioning cavity is provided with an adjusting member.

37. The film applicator according to claim **36, characterized in that** the side of the lower section facing the positioning cavity defines a mounting slot in which the adjusting member is mounted.

38. The film applicator according to claim **37, characterized in that** an end of the main body away from the adjusting member defines an opening in communication with the positioning cavity, a positioning protrusion is arranged at the bottom of the opening, and the other end of the main body adjacent to the adjusting member defines a through slot.

39. The film applicator according to claim **33, characterized in that** two outer surfaces, opposite to each other in the width direction of the main body, of the main body are provided with an anti-slip structure.
